# EUROPÄISCHE PATENTANMELDUNG

(11) **EP 0 728 570 A1**
(43) Veröffentlichungstag der Anmeldung: **28.08.1996**
(21) Anmeldenummer: 96102212.6
(22) Anmeldetag: 13.02.1996
(51) Int. Cl.: B29C 65/08, B65B 51/22

(54) **Ultraschall-Siegelung**

(30) Priorität: 16.02.1995 DE 19505298
(71) Anmelder: INTERNATIONAL PACKAGING SYSTEMS GMBH, 74564 Crailsheim (DE)
(72) Erfinder: Utz, Paul, D-74589 Satteldorf (DE); Schubert, Gerald, D-74564 Crailsheim (DE); Wollmershäuser, Paul, D-74564 Crailsheim (DE)
(74) Vertreter: Alber, Norbert

(57) **Zusammenfassung**

Es wird ein Verfahren zum flächigen, dichten Verbinden verschiedener Lagen (1,1') eines flächigen Materials (2) vorgestellt, welches Energie einspart, und dennoch ohne Verarbeitung zusätzlicher Materialien auskommt. Dieses Verfahren dient zum flächigen, dichten Verbinden wenigstens zweier Lagen eines flächigen, flexiblen Materials, insbesondere eines Verpackungsmaterials (1,1'), ohne primäre Wärmezufuhr. Hierbei geschieht die Versiegelung des Materials mittels Beaufschlagung der Kontaktfläche (6) zwischen den Lagen mit Ultraschall-Wellenstrahlung und gleichzeitigem Aufbringen von Druck quer zur Kontaktfläche (6).

## Beschreibung

In einer Vielzahl von industriellen Anwendungen müssen dünne, flexible, flächige Materialien wie etwa Folien etc. flächig und dicht miteinander verbunden werden. Dabei sollen nach Möglichkeit keine zusätzlichen Materialien in das Verfahren eingebracht werden, so daß beispielsweise das Verkleben mittels eines der bereits als flächiges Material oder deren Beschichtung vorhandenen Materialien infrage kommt, sofern diese Materialien hierfür geeignet sind, was beispielsweise auf alle thermoplastischen Kunststoffe zutrifft, die durch Erwärmung verklebt werden können.

Insbesondere tritt dieses Problem in der Verpackungsindustrie auf, und insbesondere dann, wenn das flächige Material Papier ist. Dabei ist es bekannt, Papier mit Kunststoffbeschichtungen oder schmelzfähigen Lacken etc. zu versehen, und derartige Papiere mittels Wärmebeaufschlagung auf das Papier bzw. dessen Beschichtung und gleichzeitigesZusammenpressen flächig miteinander zu verkleben.

Auch das Verkleben mittels eines separaten Klebstoffes, etwa eines Heißklebers, ist bekannt.

Auf diese Art und Weise werden etwa aus endlosem, auf der Rolle aufgewickeltem, flächigen Material Zusschnitte für Verpackungstüten oder endlose Tütenschläuche und in der Folge einzelne Tüten erstellt, indem Bodennähte und oberseitige Verschlußnähte nach dem Befüllen der Verpackungstüte erstellt werden.

Dabei ist die Verwendung von zusätzlichen Heißklebern insofern problematisch, als hier immer eine entsprechende Kompatibilität mit den zu verklebenden Materialien und Beschichtungen gegeben sein muß, und zusätzlich sind die mittels Heißkleber erstellten Klebestellen meist auch optisch wenig ansprechend aufgrund der Sichtbarkeit des zusätzlich verwendeten Klebers.

Es wird daher in der Regel das Verkleben durch Erhitzen der thermoplastischen Beschichtungsmaterialien bevorzugt. Die Wärmeeinwirkung wird in seltenen Fällen durch Heißluftbeaufschlagung erzielt, in den meisten Fällen dagegen durch Körperkontakt mit aufgeheizten Metallteilen, den sogenannten Siegelbacken. Diese Methode hat jedoch eine Reihe von Nachteilen:

Zum einen können die miteinander zu verklebenden Lagen des flächigen Materials nicht unmittelbar an der Kontaktstelle, an der sich ja die jeweilige Gegenlage befindet, in Kontakt mit der aufgeheizten Siegelbacke gebracht werden, sondern diese kann nur von der Rückseite der jeweiligen Lage angreifen, die dadurch naturgemäß einer höheren Temperatur ausgesetzt wird, als die unmittelbar zu verklebende Kontaktfläche des Materials gegenüber der Gegenlage.

Zusätzlich können bei kontinuierlichen Verfahren, bei denen etwa ein endloser Tütenschlauch etc. kontinuierlich verklebt werden soll, unter konstruktiven Gesichtspunkten die meist elektrisch beheizbaren, metallischen Siegelbacken nicht mit dem zu verklebenden Material endlos und mitlaufend ausgebildet werden; durch den Stillstand der Siegelbacken ist jedoch zusätzlich eine ständige Relativbewegung zwischen dem aufzuheizendem Material und der Siegelbacke gegeben, was sehr leicht zur Beschädigung der Oberfläche des zu verarbeitenden flächigen Materials führt, insbesondere dann, wenn die Temperatur der Oberfläche der Siegelbacke nicht dem genauen Sollwert entspricht.

Diese Temperaturregelung der Siegelbacke stellt ein weiteres Problem dar, da durch Unterbrechung bzw. Regelung der Stromzufuhr oder sonstigen Energiezufuhr zu der aus massivem Metall bestehenden Siegelbacke die Oberflächentemperatur der Siegelbacke sich nur zeitversetzt sehr träge anpaßt. Eine schnelle Beeinflussung der Oberflächentemperatur ist nicht möglich.

Daher verändert sich die Oberflächentemperatur der beheizten Siegelbacke unerwünschterweise immer dann, wenn Änderungen im Produktionsprozeß stattfinden, beispielsweise die vorherbestimmten Taktzeiten wegen Maschinenstillstand etc. oder Beschleunigung der Vorläufer-Aggregate nicht eingehalten werden. Da die Energieabfuhr durch Körperkontakt mit dem flächigen, zu bearbeitenden Material nur dann dem Sollwert entspricht, wenn die Taktzeit zwischen den einzelnen Siegelvorgängen der Soll-Taktzeit entspricht bzw. bei kontinuierlichem Verfahren die Durchlaufgeschwindigkeit dem Sollwert entspricht, ergibt sich bei Abweichung hiervon immer auch eine unerwünschte Abweichung der Oberflächentemperatur der Siegelbacke.

Ein weiterer Nachteil besteht im hohen Energiebedarf, da für eine Siegelbacke, deren Kontaktfläche eine Größe von wenigen Quadratzentimetern besitzt, eine ständige Energiezufuhr von etwa 2000 Watt notwendig ist. Bei der Vielzahl an einer Herstellungsstraße für z. B. Verpackungstüten notwendigen Siegelstellen ist dies ein enormer Energieaufwand, der sich nicht nur in erheblichen Kosten niederschlägt, sondern auch in dem Problem, daß hierdurch die gesamte Umgebung bzw. die gesamte Verpackungsstraße unerwünscht aufgeheizt wird, was beispielsweise wiederum zu Temperaturschwankungen - auch der Oberfläche der Siegelbacke - zwischen dem Maschinenanlauf bei Schichtbeginn und im Zustand etwa eine halbe Stunde später, also nach dem vollständigen Aufheizen der Anlage, niederschlägt.

Es daher die Aufgabe gemäß der Erfindung, ein Verfahren zum flächigen, dichten Verbinden verschiedener Lagen eines flächigen Materials zu schaffen, welches die Nachteile des Standes der Technik vermeidet, und insbesondere gegenüber dem Stand der Technik Energie einspart, und dennoch ohne Verarbeitung zusätzlicher Materialien auskommt.

Diese Aufgabe wird durch die kennzeichnenden Merkmale des Anspruchs 1 gelöst. Vorteilhafte Ausführungsformen ergeben sich aus den Unteransprüchen.

Verklebung mittels Ultraschall ist zwar prinzipiell bei Kunststoffen bekannt, jedoch nur für Vollmaterialien aus Kunststoff, wobei dann nur die Oberflächen dieser massiven Kunststoffteile beaufschlagt werden, also teigig oder flüssig werden und verkleben. Eine Verkleben von dünnen Kunststoff-Folien oder nur mit ultraschallsiegelfähigen Kunststoffen oder anderen Stoffen beschichteten, nicht ultraschallsiegelfähigen Trägermaterialien wurde bisher nicht praktiziert.

Das Problem des Verklebens von durchgängig aus ultraschall-siegelfähigem Kunststoff bestehenden dünnen Folien, mit Dicken in der Größenordnung eines 100 g-Papieres oder darunter, besteht darin, daß nicht nur die Kontaktfläche dieser Kunststoff-Folie zur gegenüberliegenden Gegenlage teigig wird und verklebt, sondern die beaufschlagte Folie in ihrer gesamten Dicke, was zu einem Abreissen der Folie und Ankleben an der Sonotrode führt.

Je dünner die vollständig aus ultraschallsiegelfähigem Material bestehende Folie ist, um so genauer muß also die Regelung des Ultraschall-Beaufschlagungsvorganges hinsichtlich Stromstärke, Spannungsstärke, Energiedichte und Anpreßdruck sein.

Wird dagegen - wie in der Verpackungsindustrie häufig notwendig - Papier versiegelt, beispielsweise das obere Ende einer befüllten Tüte dicht verschlossen - so kann dies durch wenigstens einseitige Beschichtung des Papiers, welches an sich nicht ultraschall-siegelfähig ist, mit einem ultraschallsiegelfähigen Material, meist einem Kunststoff, etwa Polypropylen oder Polyethylen, erreicht werden.

Dabei ergibt sich der Vorteil, daß die Sonotroden, also die die Ultraschallwellen aussendenden Metallteile, von der Rückseite des Papiers, welches nicht ultraschallsiegelfähig ist, angesetzt werden können, und damit nur diejenigen Materialien, nämlich das zwischen den Lagen des Papiers angeordnete, ultraschall-siegelfähige Beschichtungsmaterial, mit Ultraschall und zusätzlichem Druck beaufschlagt wird, um ein Verkleben zu bewirken. Damit ist sowohl ein durchgängiges Teigigwerden des Flächenmaterials nicht zu befürchten, als auch keine Farbveränderung des Papiers aufgrund zu hoher Temperatureinwirkung, als auch kein Verkleben der Rückseite des Papiers mit den Sonotroden und auch keine Beschädigung der Rückseite des Papiers.

Dennoch können auch beidseitig beschichtete Papiere miteinander mittels Ultraschall verbunden werden, wobei bei Verwendung des gleichen Materials für die beiden gegenüberliegenden Beschichtungen des Papiers bzw. Trägermaterials eine besonders genaue Regelung der Parameter des Ultraschall-Aggregates notwendig ist, was jedoch aufgrund der Tiefenwirkung der Ultraschallstrahlung prinzipiell dennoch besser möglich ist als bei dem bekannten Heißsiegeln mittels Körperkontakt mit einem beheizten Siegelbacken.

Insbesondere kann das Versiegeln beidseitig beschichteten Papiers erleichtert werden, indem unterschiedliche Beschichtungsmaterialien auf den beiden Seiten des Papiers verwendet werden, insbesondere Materialien mit unterschiedlich hoher Schmelztemperatur bzw. Teigtemperatur.

Dabei ist darauf zu achten, daß wenigstens eine der miteinander zu versiegelnden Beschichtungen eine niedrigere Schmelz- oder Teigtemperatur hat als das als Trägermaterial dienende Papier.

Auch eine Versiegelung von mehr als zwei Lagen übereinander gelegter Materialien ist aufgrund der Tiefenwirkung mittels Ultraschall möglich, und dabei ist auch die Versiegelung einer weit innen in einem Stapel von Lagen des flächigen Materials liegenden Kontaktflächen miteinander verkleben zu müssen. Die ist insbesondere bei der Mehrfachfalzung und anschließenden Versiegelung von Tüten vorteilhaft.

Eine typische Material- und Parameterkombination ist dabei die Verwendung eines 60 bis 80 g/m2 schweren Papieres als Trägermaterial, welches auf der einen Seite, beispielsweise der inneren Seite, mit Polyethylen von etwa 10 bis 40 µm Schichtdicke beschichtet ist und auf der anderen, beispielsweise der äußeren Seite, mit Polypropylen von etwa 20 µm Schichtdicke.

Vorzugsweise wird dabei eher ein geringeres Papiergewicht von etwa 60 g/m2 gewählt und entsprechend auch die Schichtdicke des Polyethylens möglichst gering, etwa nur 15 µm, gewählt. Das flächige Material bleibt dadurch besonders flexibel und gut faltbar, ohne daß beim Falten optisch unerwünschte Veränderungen, beispielsweise Risse etc. in der Beschichtung auftreten.

Bei derartigen Materialien wird mit Ultraschall im Frequenzbereich von 20 bis 40 kHz gearbeitet, wobei die Wellenlänge in Abhängigkeit von der Größe der Kontaktfläche der Sonotroden und insbesondere bei langen, schlanken Kontaktflächen mit einem Verhältnis von mindestens 1 : 5 in Abhängigkeit von der Länge der Kontaktfläche der Sonotrode festzulegen ist. Bei einer Sonotrodenlänge und damit der Länge deren Druckfläche von nicht mehr als etwa 130 mm kann mit höherer Frequenz von etwa 40 kHz gearbeitet werden, während größere Sonotrodenlängen bis etwa 300 mm bereits eine niedrigere Frequenz von etwa 20 kHz erfordern, verbunden mit dem Nachteil, daß die Sonotrodenfläche bzw. -länge dann einen gewissen Mindestwert nicht unterschreiten darf.

Zum Verkleben der Kontaktflächen während oder kurz nach der Ultraschallbeaufschlagung werden die Sonotroden an den zu verklebenden Lagen von der Rückseite und quer zu deren Kontaktfläche mit Druck aufgesetzt, der einige Sekunden, mindestens jedoch einige Zentelsekunden nach dem Beenden der Ultraschallbeaufschlagung erhalten bleiben muß.

Bei einer Kontaktfläche von etwa 0,5 cm2 bis etwa 3 cm2 wird dabei eine Anpreßkraft von 30 bis 40 kg gewählt. Bei größeren oder kleineren Kontaktflächen wird zwar die Anpreßkraft ebenfalls erhöht bzw. verringert, jedoch nicht im vollen Verhältnis der Vergrößerung oder Verkleinerung der Kontaktfläche, sondern uterproportional mit einem höchstens 0,5-fachen Faktor.

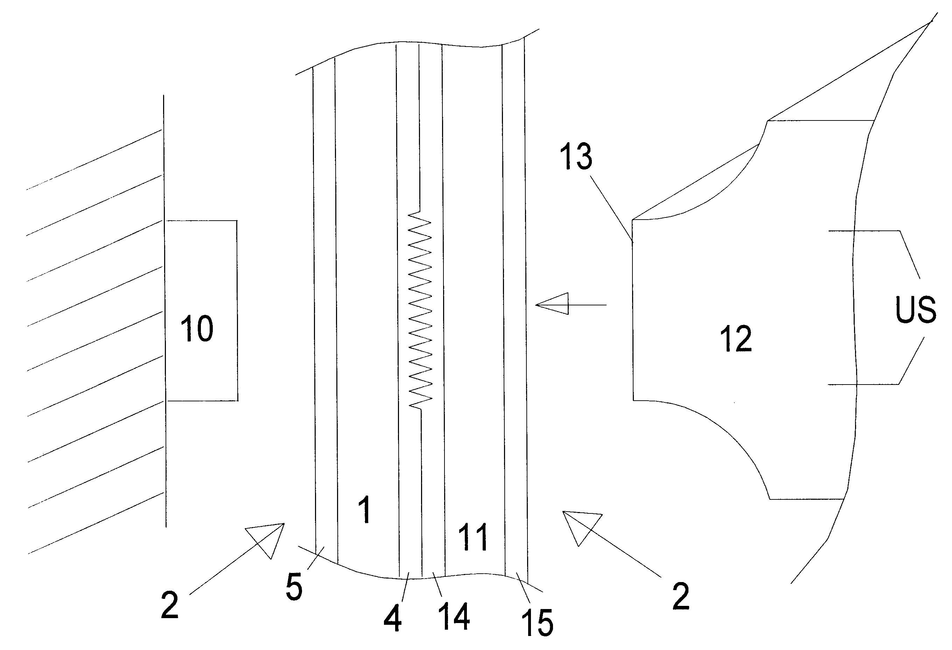

Eine Ausführungsform gemäß der Erfindung ist anhand der Figur beispielhaft näher erläutert:

Dabei liegen die beiden Lagen 1 und 11 eines flächigen Materials 2, beispielsweise Papier so, aneinander an, daß beispielsweise die jeweils bezüglich der späteren Tüte innere Beschichtung 4 bzw. 14 der Lagen 1, 11 des flächigen Materials 2 gegeneinander anliegen. Die bezüglich der späteren Tüte außen liegenden Beschichtungen 5 bzw. 15 sind an dieser Siegelstelle jeweils bezüglich der gegenüberliegenden Lage 11 bzw. 1 auf der abgeweandten Seite aufgebracht aufgrund entsprechender Falzung etc. bei der Herstellung der Tüte.

Die Sonotrode 12, in der die Ultraschall-Wellenstrahlung erzeugt und vorzugsweise über die Druckfläche 13 abgegeben wird, drückt auf die Außenseite des Stapels der flächigen Materialien 2, während die andere, gegenüberliegende Außenseite von einem ortsfesten bzw. druckbeaufschlagten Gegenhalter 10 abgestützt wird.

Durch die gemeinsame Beaufschlagung mittels Ultraschall und Anpreßdruck werden die gegeneinander gerichteten, inneren Beschichtungen 4 und 14 teigig bzw. flüssig im Bereich der Ultraschalleinwirkung und Verkleben damit miteinander. Dies ergibt eine flächige und dichte Verbindung der Lagen 1, 11 des flächigen Materials miteinander, und zwar ohne Beeinträchtigung der beim Ultraschallvorgang außen liegenden Beschichtungen, in diesem Falle der Beschichtungen 5, 15.

## Patentansprüche

1. Verfahren zum flächigen, dichten Verbinden wenigstens zweier Lagen (1, 1') eines flächigen, flexiblen Materials (2), insbesondere eines Verpackungsmaterials, ohne primäre Wärmezufuhr,
**dadurch gekennzeichnet, daß**
die Versiegelung des Materials (2) mittels Beaufschlagung der Kontaktfläche zwischen den Lagen (1, 1') mit Ultraschall-Wellenstrahlung und gleichzeitigem Aufbringen von Druck quer zur Kontaktfläche (6) geschieht.

2. Verfahren zum flächigen, dichten Verbinden wenigstens zweier Lagen (1, 1') eines flächigen, flexiblen Materials (2), insbesondere eines Verpackungsmaterials, ohne primäre Wärmezufuhr, und wobei das flächige Material (2) nicht dehnbar und leicht brennbar ist, insbesondere Papier (3) ist,
**dadurch gekennzeichnet, daß**
das fächige Material (2) mit wenigstens einer einseitgen Beschichtung (4 bzw. 5) versehen ist, die durch Ultraschallbestrahlung und gleichzeitige Druckaufbringung mit einer Gegenlage (11) bzw. deren Beschichtung versiegelbar ist.

3. Verfahren nach Anspruch 1 oder 2,
**dadurch gekennzeichnet, daß**
das flächige Material (2) eine Dicke, einseitige Beschichtung (4 bzw. 5) aufweist, die maximal die Dicke des Flächenmaterials (2) aufweist.

4. Verfahren nach Anspruch 3,
**dadurch gekennzeichnet, daß**
das flächige Material (2) sowohl eine innere als auch eine äußere Beschichtung (4 bzw. 5) aufweist, deren Schichtdicke dünner ist als bei einseitiger Beschichtung.

5. Verfahren nach Anspruch 4,
**dadurch gekennzeichnet, daß**
die innere und äußere Beschichtung (4 bzw. 5) aus unterschiedlichen Materialien bestehen, welche unterschiedlich hohe Schmelztemperaturen bzw. Schwellentemperaturen zum Übergang in den teigigen Zustand vom festen Zustand aus besitzen.

6. Verfahren nach einem der vorhergehenden Ansprüche,
**dadurch gekennzeichnet, daß**
das flächige Material (2) Papier (3) mit einem Flächengewicht von 60 bis 80 g/qm ist.

7. Verfahren nach einem der vorhergehenden Ansprüche,
**dadurch gekennzeichnet, daß**
als innere Beschichtung Polyethylen in einer Schichtdicke von ca. 15 bis 20µm, insbesondere von etwa 15µm verwendet wird.

8. Verfahren nach einem der vorhergehenden Ansprüche,
**dadurch gekennzeichnet, daß**
als äußere Beschichtung Polypropylen in einer Schichtdicke von etwa 20 µm verwendet wird.

9. Verfahren nach einem der vorhergehenden Ansprüche,
**dadurch gekennzeichnet, daß**
die Ultraschallstrahlung eine Frequenz von 40 kHz besitzt, und die Sonotroden (12) eine längliche Druckfläche (13) von maximal etwa 130 mm Länge aufweisen.

10. Verfahren nach einem der vorhergehenden Ansprüche,
**dadurch gekennzeichnet, daß**
die Ultraschallstrahlung eine Frequenz von 20 kHz besitzt, und die Sonotroden (12) eine längliche Druckfläche (13) von maximal etwa 300 mm Länge aufweisen.

11. Verfahren nach einem der vorhergehenden Ansprüche,
**dadurch gekennzeichnet, daß**
der Anpreßdruck während bzw. kurz nach der Ultraschallbeaufschlagung der beiden aneinanderliegenden Lagen (1) und der Gegenlage (11) etwa 30 bis 40 kp/cm2 beträgt.
